# EUROPEAN PATENT APPLICATION

(11) **EP 1 261 156 A1**
(43) Date of publication of application: **27.11.2002**
(21) Application number: 02715770.0
(22) Date of filing: 17.01.2002
(51) Int. Cl.: H04J 1/00, H04J 11/00

(54) **PEAK POWER SUPPRESSING APPARATUS AND PEAK POWER SUPPRESSING METHOD**

(30) Priority: 18.01.2001 JP 2001010835
(71) Applicant: MATSUSHITA ELECTRIC INDUSTRIAL CO., LTD., Kadoma-shi, Osaka 571-8501 (JP)
(72) Inventor: UESUGI, Mitsuru, Yokosuka-shi, Kanagawa 238-0048 (JP)
(74) Representative: Grünecker, Kinkeldey, Stockmair & Schwanhäusser Anwaltssozietät
(86) International application number: JP0200264
(87) International publication number: WO02058294

(57) **Abstract**

A peak power suppression apparatus and a peak power suppression method that reduce memory capacity and the amount of calculation while suppressing peak power in an OFDM signal. A frequency shift section (103) applies frequency shift to an OFDM signal generated in an IFFT section (102) in such a way that the frequency of a peak suppression carrier in this OFDM signal becomes 0. A direct current setup section (105) calculates a direct current signal that suppresses peak power in the frequency-shifted OFDM signal. An addition section (106) adds the direct current signal from the direct current setup section (105) to the frequency-shifted OFDM signal. A frequency shift section (111) applies to the OFDM signal to which the direct current signal has been added frequency shift in such a way that the frequency of the peak suppression carrier in this OFDM signal returns.

## Description

### Technical Field

The present invention relates to peak power suppression apparatus and peak power suppression method that suppress peak power in multicarrier signals generated in communication that employs multicarrier modulation schemes such as OFDM modulation schemes.

### Background Art

In recent years, multicarrier modulation schemes such as OFDM modulation schemes draw attention as the modulation schemes that improve the use efficiency of frequency. Among such multicarrier modulation schemes, in particular, the OFDM modulation scheme is the modulation scheme with the highest frequency use efficiency. In an OFDM modulation scheme, hundreds of carriers (subcarriers) on which data signals are superposed are orthogonal to each other, which makes it possible to improve the use efficiency of frequency.

In such OFDM modulation scheme, an OFDM signal (multicarrier signal) is generated by superposing data signals or such on a number of carriers. A transmission signal is then generated by applying set transmission processing to this multicarrier signal, and the transmission signal is amplified through a power amplification apparatus and then transmitted.

From this, a problem arises that the peak-to-average power ratio (peak power as opposed to average power) of a generated multicarrier signal grows in proportion to the number of carriers. As a result, the impact of non-linear distortion grows and consequently spectral radiation to outside the band increases.

Also in multicarrier modulation schemes other than OFDM modulation schemes, a number of carriers are used to superpose data signals. So the problem like the above can occur similarly with any multicarrier modulation scheme, and conventionally, in order to suppress peak power in a multicarrier signal, peak power suppression apparatus has been used that uses a set number of subcarriers as peak suppression carriers from among the subcarriers on which data signals are superposed.

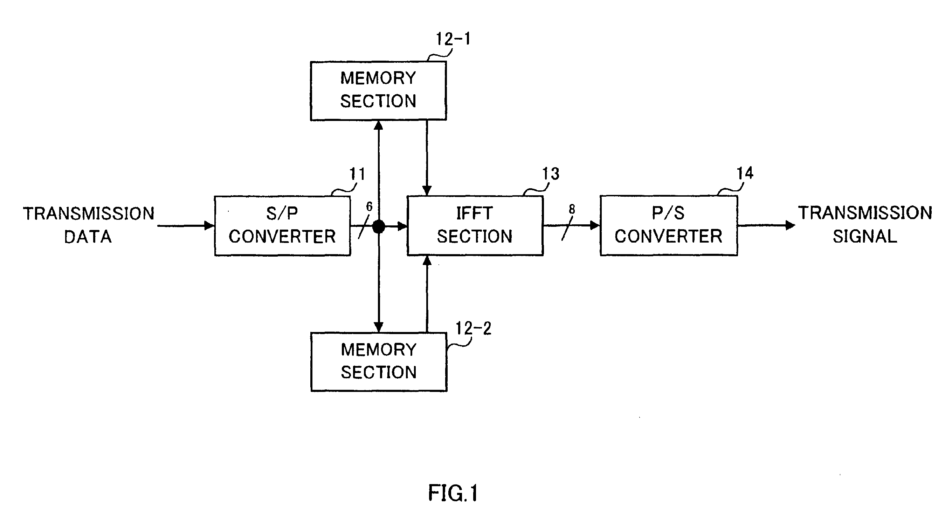

First, the first example of a conventional peak power suppression apparatus will be described with reference to FIG.1. FIG.1 is a block diagram showing the configuration of a conventional peak power suppression apparatus (the first example). Incidentally, described in FIG.1 is a sample case where the total number of subcarriers is 6 and the number of peak suppression carriers is 2 (here the first peak suppression carrier and the second peak suppression carrier), and a BPSK modulation scheme is used for the modulation scheme.

In FIG.1, a sequence of transmission data (data signal) is converted through serial/parallel (hereinafter "S/P") converter 11 into multisequence transmission data (here 6 sequences or 6 samples) and thereafter output to IFFT (Inverse Fourier Transform) section 13, memory section 12-1, and memory section 12-2.

In memory section 12-1 (memory section 12-2), in response to the multisequence transmission data from S/P converter 11, a suppression signal (signal with a phase and amplitude) that is to be superposed on the first peak suppression carrier (the second peak suppression carrier) is read out. In this memory section 12-1 (memory section 12-2), suppression signals that correspond to the patterns in the multisequence transmission data from S/P converter 11 are stored. The suppression signal read out from memory section 12-1 and from memory section 12-2 is output to IFFT section 13.

In IFFT section 13, IFFT processing (Inverse Fourier Transform processing) takes place using the multisequence transmission data from S/P converter 11, the suppression signal from memory section 12-1, and the suppression signal from memory section 12-2, and consequently an 8-sequence, or 8-sample OFDM signal is generated (to be more specific, for instance, 8 samples of complex signals such as 1.255 + j3.445). In short, an 8-seuence or 8-sample OFDM signal is generated in which each of multisequence transmission data (6-sequence or 6-sample) from S/P converter 11 is superposed on a sequence-dedicated subcarrier and the suppression signal from memory section 12-1 is superposed on the first peak suppression carrier and the suppression signal from memory section 12-2 is superposed on the second peak suppression carrier. By this means an OFDM signal with a suppressed peak power is acquired through IFFT section 13.

The multisequence (8-sequence or 8-sample) OFDM signal generated in IFFT section 13 is converted through parallel/serial (hereinafter P/S) converter 14 into a sequence of transmission data, whereby a transmission signal with a suppressed peak power is acquired.

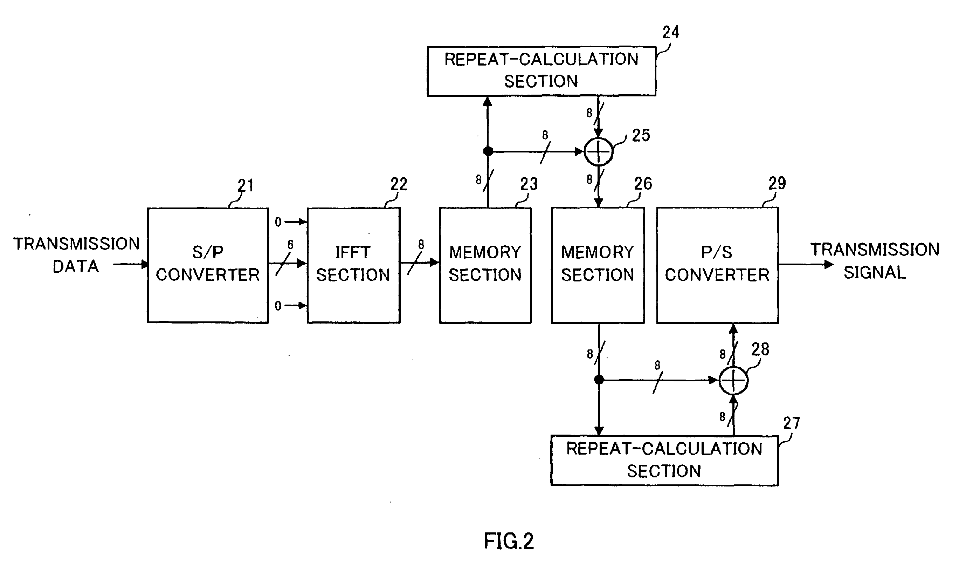

Next the second example of a conventional peak power suppression apparatus will be described with reference to FIG.2. FIG.2 is a block diagram showing the configuration of a conventional peak power suppression apparatus (the second example). Incidentally, described in FIG.2 is a sample case where the total number of subcarriers is 6 and the number of peak suppression carriers is 2 (here the third peak suppression carrier and the fourth peak suppression carrier), and a BPSK modulation scheme is used for the modulation scheme.

In FIG.2, a sequence of transmission data (data signal) is converted through S/P converter 21 into multisequence transmission data (here 6 sequences or 6 samples) and thereafter output to IFFT section 22. In IFFT section 22, IFFT processing takes place using the multisequence transmission data from S/P converter 21, and consequently an 8-sequence, or 8-sample first OFDM signal is generated. In short, an 8-seuence or 8-sample first OFDM signal is generated in which each of multisequence (6-sequence or 6-sample) transmission data from S/P converter 21 is superposed on a sequence-dedicated subcarrier and signals with amplitude 0 are superposed on the third peak suppression carrier and on the fourth peak suppression carrier. The generated first OFDM signal is stored in memory section 23 and thereafter output to repeat-calculation section 24 and to addition section 25.

In repeat-calculation section 24, calculations are repeated using set algorithms, whereby a suppression signal such as one that suppresses peak power in the first OFDM signal stored in memory section 23 is calculated. In short, repeat-calculations take place in such a way as to continuously modify and converge suppression signals until peak power goes below a set level in the first OFDM signal.

This suppression signal is a sinusoidal wave with a phase and amplitude. The calculated suppression signal is added in addition section 25 to the first OFDM signal stored in memory section 23, whereby an 8-sequence, or 8-sample second OFDM signal with a suppressed peak power is generated.

The second OFDM signal is of equal value with an 8-sequence, or 8-sample OFDM signal in which each of multisequence (6-sequence, or 6-sample) transmission data from S/P converter 21 is superposed on a sequence-dedicated subcarrier, a suppression signal calculated in repeat-calculation section 24 is superposed on the third peak suppression carrier, and a signal with amplitude 0 is superposed on the fourth peak suppression carrier. The generated second OFDM signal is stored in memory section 26 and thereafter output to repeat-calculation section 27 and addition section 28.

In repeat-calculation section 27, calculations are repeated using set algorithms, whereby a suppression signal such as one that suppresses peak power in the second OFDM signal stored in memory section 26 is calculated. In short, repeat-calculations take place in such a way as to continuously modify and converge a suppression signal until peak power goes below a set level in the second OFDM signal.

This suppression signal is a sinusoidal wave with a phase and amplitude. The calculated suppression signal is added in addition section 28 to a new OFDM signal stored in memory section 26, whereby an 8-sequence, or 8-sample third OFDM signal with a suppressed peak power is generated.

The third OFDM signal is of equal value with an 8-sequence, or 8-sample OFDM signal in which each of multisequence (6-sequence, or 6-sample) transmission data from S/P converter 21 is superposed on a sequence-dedicated subcarrier, a suppression signal calculated in repeat-calculation section 24 is superposed on the third peak suppression carrier, and a suppression signal calculated in repeat-calculation section 27 is superposed on the fourth peak suppression carrier.

The generated multisequence (8-sequence or 8-sample) third OFDM is converted through P/S converter 29 into a sequence of transmission data, whereby a transmission signal with a suppressed peak power is acquired.

However, with the above conventional peak power suppression apparatus, the following problems exist. First, with regard to above first sample conventional peak power suppression apparatus, if the total number of subcarriers grows, the number of the patterns in transmission data that is input to memory section 12-1 and memory section 12-2 becomes enormous. With this, the volume of data that memory section 12-1 and memory section 12-2 should store becomes enormous. To be more specific, the volume of data that memory section 12-1 and memory section 12-2 should each store increases exponentially to the total number of subcarriers. Also, the volume of data that memory section 12-1 and memory section 12-2 should store increases in proportion to the number of peak suppression carriers. In addition, when peak suppression carriers are not fixedly set from among all subcarriers, the number of data that memory section 12-1 and 12-2 should store increases more.

Secondly, with regard to the second sample conventional peak power suppression apparatus, an enormous amount of calculation is required as a suppression signal that suppresses peak power in an OFDM signal is calculated using repeat-calculations. In addition, as the number of peak suppression carriers increases, the number of suppression signals to be calculated increases, which then requires even a greater amount of calculation.

As described above, the above conventional peak power suppression apparatus pose a problem that an enormous memory capacity or an enormous amount of calculation is required to suppress peak power in an OFDM signal.

### Disclosure of Invention

It is an object of the present invention to provide a peak power suppression apparatus and a peak power suppression method that reduces memory capacity and the amount of calculation while suppressing peak power in an OFDM signal.

According to one aspect of the present invention, a peak power suppression apparatus comprises a generation section that generates a multicarrier signal in which a signal with amplitude 0 is superposed on a specific carrier of all carriers; a first frequency shift section that applies frequency shift to a generated multicarrier signal in such a way that a frequency of said specific carrier becomes 0; an addition section that adds a direct current signal that is for suppressing peak power in the generated multicarrier signal to the multicarrier signal after frequency shift; and a second frequency shift section that applies frequency shift to the multicarrier signal acquired through the addition in such a way that the frequency of said specific carrier returns.

### Brief Description of Drawings

FIG.1 is a block diagram showing a configuration of a conventional peak power suppression apparatus (First example);
FIG.2 is a block diagram showing a configuration of a conventional peak power suppression apparatus (Second example);
FIG.3 is a block diagram showing a configuration of a peak power suppression apparatus according to Embodiment 1 of the present invention;
FIG.4A is a pattern diagram showing a condition of subcarriers in the first OFDM signal generated by a peak power suppression apparatus according to Embodiment 1 of the present invention;
FIG.4B is a pattern diagram showing a condition of subcarriers in the first OFDM signal that are frequency-shifted by a peak power suppression apparatus according to Embodiment 1 of the present invention;
FIG.4C is a pattern diagram showing a condition of subcarriers in the second OFDM signal that are frequency-shifted by a peak power suppression apparatus according to Embodiment 1 of the present invention;
FIG.5 is a block diagram showing a configuration of a peak power suppression apparatus according to Embodiment 2 of the present invention;
FIG.6 is a pattern diagram showing a condition of subcarrier arrangement in a peak power suppression apparatus according to Embodiment 2 of the present invention;
FIG.7 is a block diagram showing a configuration of a peak power suppression apparatus according to Embodiment 3 of the present invention;
FIG.8A is a pattern diagram showing a sample arrangement of subcarriers in a peak power suppression apparatus according to Embodiment 1 of the present invention;
FIG.8B is a pattern diagram showing a first sample arrangement of subcarriers in a peak power suppression apparatus according to Embodiment 3 of the present invention;
FIG.8C is a pattern diagram showing a second sample arrangement of subcarriers in a peak power suppression apparatus according to Embodiment 3 of the present invention;
FIG.9A is a pattern diagram showing a condition of a wave in the real part of an OFDM signal in a peak power suppression apparatus according to Embodiment 4 of the present invention;
FIG.9B is a pattern diagram showing a condition of a wave in the real part of an OFDM signal to which a semi-optimum peak suppression signal is added in a peak power suppression apparatus according to Embodiment 4 of the present invention; and
FIG.10 is a block diagram showing a configuration of a direct current setup section in a peak power suppression apparatus according to Embodiment 4 of the present invention.

### Best Mode for Carrying Out the Invention

Focusing on the fact that a direct current signal can be superposed on a subcarrier with amplitude 0 in an OFDM signal, the present inventor has arrived at the present invention on discovering that by first applying frequency shift to a generated OFDM signal in such a way that makes the frequency of set subcarriers in this OFDM signal 0 and then by adding direct current signals to the frequency-shifted OFDM signal and thereafter applying to the OFDM signal to which direct current signals have been added such frequency shift that makes the frequency of the set subcarriers in this OFDM signal return, an OFDM signal can be generated in which signals that suppress peak power are superposed on the above set subcarriers.

The gist of the present invention is applying frequency shift to an OFDM signal generated by way of superposing signals with amplitude 0 on set subcarriers of all subcarriers in such a way as to make the frequency of the above set subcarriers in the OFDM signal 0 and adding direct current signals for the suppression of peak power in the OFDM signal to the frequency-shifted OFDM signal.

With reference to the accompanying drawings now, embodiments of the present invention will be described in detail.

### (Embodiment 1)

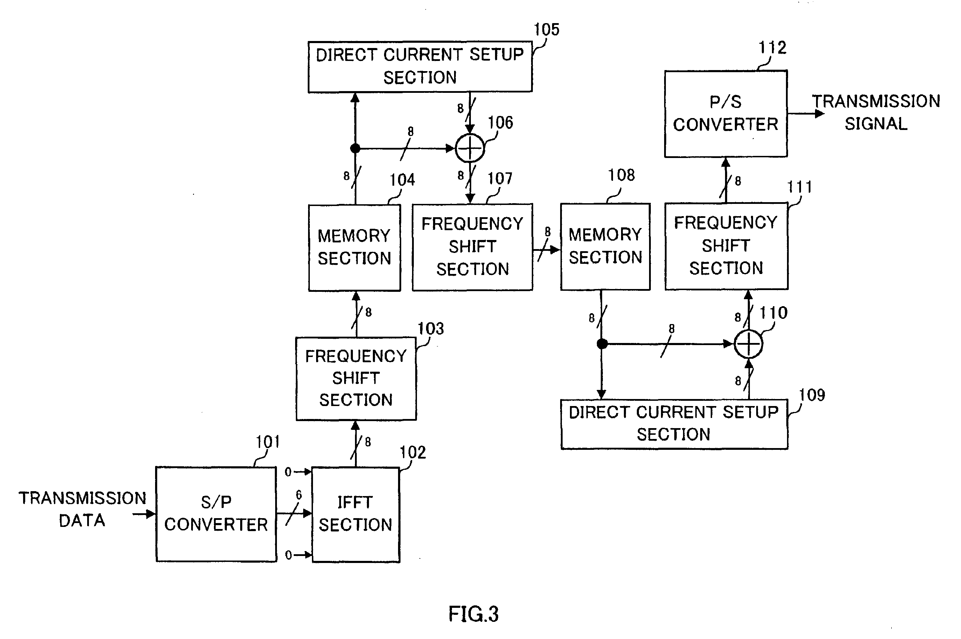

FIG.3 is a block diagram showing a configuration of a peak power suppression apparatus according to Embodiment 1 of the present invention. With the present embodiment, as an example, a case will be described here where the total number of subcarriers is 6 and the number of peak suppression signals is 2 (the first peak suppression signal and the second peak suppression signal). The description hereinafter will uniformly use "Hz" for the unit of frequency.

In FIG.3, S/P converter 101 converts a sequence of transmission data (data signal) into multi-sequence (6-sequence or 6-sample) transmission data. IFFT section 102 generates the first OFDM signal by applying IFFT processing using the multi-sequence transmission data from S/P converter 101 and signals with amplitude 0. Frequency shift section 103 applies frequency shift (frequency conversion) to the first OFDM signal generated in IFFT section 102. Memory section 104 stores the first OFDM signal frequency-shifted by frequency shift section 103 and then outputs the first OFDM signal to direct current setup section 105 and addition section 106.

Direct current setup section 105 outputs a direct current signal (here, the first suppression signal) that suppresses peak power in the fist OFDM signal stored in memory section 104 to addition section 106. Addition section 106 generates a new OFDM signal (the second OFDM signal here) by adding the first OFDM signal stored in memory section 104 and the first suppression signal from direct current setup section 105.

Frequency shift section 107 applies frequency shift (frequency conversion) to the second OFDM signal generated by addition section 106. Memory section 108 stores the second OFDM signal frequency-shifted by frequency shift section 107 and then outputs the second OFDM signal to direct current setup section 109 and addition section 110.

Direct current setup 109 outputs a direct current signal (here, the second suppression signal) that suppresses peak power in the second OFDM signal stored in memory section 108 to addition section 110. Addition section 110 generates a new OFDM signal (here, the third OFDM signal) by adding the second OFDM signal stored in memory section 108 and the second suppression signal from direct current setup section 109.

Frequency shift section 111 applies frequency shift to the third OFDM signal generated by addition section 110. P/S converter 112 converts the frequency-shifted third OFDM signal into a sequence of transmission signal.

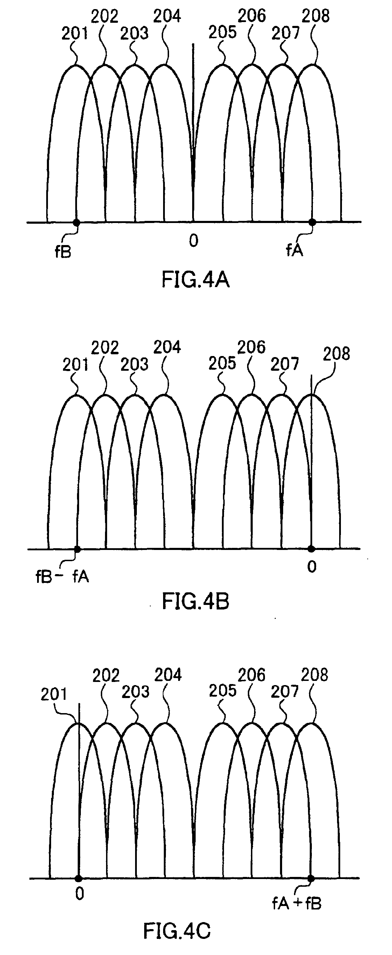

Next, the operation of a peak power suppression apparatus of the above configuration will be described with reference to FIG.3and FIG.4. FIG.4's are pattern diagrams showing conditions of frequency shift by frequency shift sections 103, 107, and 111 in a peak power suppression apparatus according to Embodiment 1 of the present invention.

A sequence of transmission data (data signal) is converted through S/P converter 101 into 6-sequence (from the first sequence to the sixth sequence) or 6-sample transmission data and thereafter output to IFFT section 102. In IFFT section 102, an 8-sequence or 8-sample first OFDM signal is generated through IFFT processing using 6-sequence, or 6-sample transmission data from S/P section 101. In other words, an 8-sequence, or 8-sample first OFDM signal is generated in which each of the 6-sequence transmission data from S/P converter 101 is superposed on a sequence-dedicated subcarrier and signals with amplitude 0 are superposed on the first peak suppression carrier and the second peak suppression carrier.

To be more specific, with reference to FIG.4A, an 8-sequence first OFDM signal is generated, in which transmission data in the first sequence to the sixth sequence are superposed on subcarrier (data carrier) 202 to subcarrier (data carrier) 207 respectively and signals with amplitude 0 are superposed on the first peak suppression carrier and the second peak suppression carrier. The first peak suppression carrier 208 is arranged at frequency fA on the frequency axis, and the second peak suppression carrier 201 is arranged at frequency fB on the frequency axis. In short, the frequency of the first peak suppression carrier 208 is fA and the frequency of the second peak suppression carrier 201 is fB.

The first OFDM signal generated in IFFT section 102 is applied frequency shift in frequency shift section 103. To be more specific, with reference to FIG.4A, the first OFDM signal is frequency-shifted in such a way that the frequency of the first peak suppression carrier 208 becomes 0. As shown in FIG.4A, since the frequency of the first peak suppression carrier 208 in the first OFDM signal is fA, the first OFDM signal is frequency-shifted just by "-fA".

Here, frequency shift refers to parallel movement of the spectra in a signal subject to frequency shift (here the first OFDM signal) on the frequency axis. To be more specific, if a signal subject to frequency shift is frequency-shifted by Y [Hz], the X [Hz] property of the signal becomes X + Y [Hz]. X applies to all the signal bands in this signal. For instance, if a 100 [Hz] frequency shift is applied to a certain signal, the 10 [Hz] property of the signal moves to 110 [Hz], and likewise the -10 [Hz] property of the signal moves to 90 [Hz].

By such frequency shift, as shown in FIG.4B, the frequency of the first peak suppression carrier 208 becomes 0 and the frequency of the second peak suppression carrier 201 becomes fB-fA. The frequency-shifted first OFDM signal is stored in memory section 104 and thereafter output to direct current setup section 105 and addition section 106.

In direct current setup section 105, a direct current signal for the suppression of peak power in the first OFDM signal, that is the first suppression signal, is calculated. To be specific, this first suppression signal is a signal that minimizes the square sum of the real part and the imaginary part of the first OFDM signal when added to the first OFDM signal. This first suppression signal can be calculated for instance by the following two methods.

The first method will be described. Suppose in this context the sample number per symbol in the first OFDM signal is N with N points of samples being a₀, a₁, ..., a_{N-1}. The desired first suppression signal (DC value) is b, where a and b are both complex numbers.

The first suppression signal that needs to be acquired is b such as one that minimizes MAX (|a₀-b|², |a₁-b|², ..., |a_{N-1}-b|²).

Where the real part of b is bR and the imaginary part of b is bI, and |a₀-b|², |a₁-b|² and |a_{N-1}-b|² can be each expressed as a plane on the two bR and bI axis (that is, they form a three-dimensional graph) . The plane that covers the maximum points of N planes is MAX (|a₀-b|², |a₁-b|² and |a_{N-1}-b|²). Consequently, if the minimum point in this plane is found, the optimum b can be acquired. To be specific, where bR and bI are parameters, the optimum first suppression signal b can be acquired. However, since the non-linear calculation called MAX is involved, it is not possible to analytically acquire the optimum first suppression signal.

The second method will be described. On using the above-described first method, depending on how parameters (bR and bI) are determined, the precision of the first suppression signal and the amount of calculation for the first suppression signal bear a trade-off relationship. So, it is desirable to acquire the first suppression signal in a more simple way.

First, all sample points are vector-displayed on a complex plane. Next a minimal circle that includes all these points (called "minimal circle") is acquired, and the difference (vector) between the center of this minimal circle and the center of the above complex plane is b.

When from all of the vectors (to be specific, the line that links all the sample points and the original point) two vectors with the longest distance in between are found in pair (here A and B), it is obvious that such a minimal circle does not exist that is smaller than the circle ("standard circle," for convenience) that has its center being the middle point on the line linking A and B and that furthermore includes A and B on its circumference. If all the sample points are included in this standard circle, the difference (vector) between the center of this minimal circle and the center of the above complex plane is optimum b.

According to this second method, although not all standard circles include all sample points, the difference between the center of a circle smaller than a standard circle and the center of the above complex plane is cannot be a solution. By this means, it is possible to narrow the search range in bR and bI in the above-described first method. Thereafter, the optimum first suppression signal can be acquired by using the above-described first method. Above calculation methods for the first suppression signal have been described.

The first suppression signal calculated by direct current section 105 is added in addition section 106 to the first OFDM signal from memory section 104. By this means, the second OFDM signal with a suppressed peak power is acquired. In short, direct current property that corresponds to the first suppression signal is added to the first OFDM signal from memory section 104.

The second OFDM signal generated in addition section 106 is applied frequency shift in frequency shift section 107. To be more specific, the second OFDM signal is frequency-shifted in such a way that the frequency of the second peak suppression carrier 201 becomes 0. As shown in FIG.4B, since the frequency of the second peak suppression carrier 201 in the second OFDM signal is fB-fA, the second OFDM signal is frequency-shifted just by "fA - fB". By means of this frequency shift, as shown in FIG.4C, the frequency of the second peak suppression carrier 201 becomes 0 and the frequency of the first peak suppression carrier 208 becomes fA + fB. The frequency-shifted second OFDM signal is stored in memory section 108 and thereafter output to direct current setup section 109 and addition section 110.

In direct current setup section 109, using the second OFDM signal stored in memory section 108, a direct current signal for the suppression of peak power in the second OFDM signal, that is the second suppression signal, is calculated. To be specific, this second suppression signal is a signal that minimizes the square sum of the real part and the imaginary part of the second OFDM signal when added to the second OFDM signal. Calculation of this second suppression signal can be done through the above-described methods used in direct current setup section 105.

The second suppression signal calculated by direct current section 109 is added in addition section 110 to the second OFDM signal from memory section 108. By this means, a third OFDM signal with a suppressed peak power is acquired. In short, direct current property that corresponds to the second suppression signal is added to the second OFDM signal from memory section 108.

The third OFDM signal generated in addition section 110 is applied frequency shift in frequency shift section 111. To be more specific, the third OFDM signal is frequency-shifted in such a way that the frequency of the first peak suppression carrier 208 becomes fA and the frequency of the second peak suppression carrier 201 becomes fB. As shown in FIG.4C, since the frequency of the first peak suppression carrier 208 is fA + fB and the frequency of the second frequency peak suppression carrier 201 is 0, the third OFDM signal is frequency-shifted just by "-fB." By means of this frequency shift, as shown in FIG.4A, the frequency of the first peak suppression carrier 208 becomes fA, that is, becomes the same as the frequency of the first peak suppression carrier 208 in the first OFDM signal prior to frequency shift, and likewise the frequency of the second peak suppression carrier 201 becomes fB, that is, becomes the same as the frequency of the second peak suppression carrier in the first OFDM signal prior to frequency shift.

Now the third OFDM signal that is frequency-shifted through frequency shift section 111 will be given consideration. The first suppression signal added by addition section 106 to the first OFDM signal stored in memory section 104 becomes essentially identical with the signal that is superposed on the first peak suppression carrier 208 in the frequency-shifted third OFDM signal, when the second OFDM signal is frequency-shifted by fA-fB and the third OFDM signal is applied frequency shift processing by -fB. Similarly, the second suppression signal added by addition section 110 to the second OFDM signal stored in memory section 108 becomes essentially identical with the signal that is superposed on the second peak suppression carrier 201 in the frequency-shifted third OFDM signal, when the third OFDM signal is applied frequency-shift processing just by -fB.

With a conventional method, signals that are superposed on the first peak suppression carrier 208 and the second suppression carrier 201 in the frequency-shifted third OFDM signal are calculated by repeat-calculations that require an enormous amount of calculation such as described above. However, according to the present embodiment, by first applying frequency shift to an OFDM signal in such a way that makes the frequency of peak suppression carriers 0, it suffices to calculate only direct current signals as suppression signals that suppress peak power in the frequency-shifted OFDM signal. Following this, the calculated direct current signals are added to the above frequency-shifted OFDM signal and thereafter frequency shift is applied to the OFDM signal the above direct current signals have been added to in such a way that the frequency of the above peak suppression carriers returns. As a result, it is possible to calculate signals that are to be superposed on the above peak suppression carriers and to generate an OFDM signal in which peak power is unfailingly suppressed, without executing repeat-processing that requires an enormous amount of calculation.

Again with reference to FIG.3, the third OFDM signal applied frequency shift through frequency section 111 is converted through P/S converter 112 from an 8-sequence signal into a 1-sequence signal. By this means, a transmission signal with a suppressed peak power is generated.

Although with the present embodiment a case is described here where subcarrier 208 and subcarrier 201 are used for the first peak suppression carrier and the second peak suppression carrier respectively. However, of all subcarriers, any subcarriers of preference can be used for the first peak suppression carrier and the second peak suppression carrier. In such case, first, signals with amplitude 0 are superposed on the first peak suppression carrier and the second peak suppression carrier and data signals are superposed on subcarriers other than the first peak suppression carrier and the second peak suppression carrier, and an OFDM signal is generated. Next, the generated OFDM signal is applied frequency shift in such a way that the frequency of the first peak suppression carrier (the second peak suppression carrier) becomes 0, and thereafter peak suppression signals (direct current signals) are added to the frequency-shifted OFDM signal. Following this, the OFDM signal to which peak suppression signals have been added is applied frequency shift in such a way that the frequency of the first peak suppression carrier (the second peak suppression carrier) returns, and thus it is possible to generate a new OFDM signal with a suppressed peak power.

Furthermore, with the present embodiment a case is described here where two of the first peak suppression carrier and the second peak suppression carrier are used as peak suppression carriers. However, the number of peak suppression carriers is unlimited. In such case, frequency shift and the addition of peak suppression signals (direct current signal) to OFDM signals apply to all peak suppression carriers.

As described above with the present embodiment, first, an OFDM signal in which data signals are superposed on subcarriers other than peak suppression carriers, and then the generated OFDM signal is applied frequency in such a way that the frequency of peak suppression carriers become 0. Next, peak suppression signals that are direct current signals are added to the frequency-shifted OFDM signal. After this, by applying the OFDM signal, to which peak suppression signals have been added, frequency shift in such a way that the frequency of the peak suppression carriers returns, an OFDM signal with a suppressed peak power is generated.

Thus according to the present embodiment, peak suppression carriers that are direct current signals are added to an OFDM signal that is frequency-shifted in such a way that makes the frequency of the peak suppression carriers 0, and thereafter the OFDM signal to which peak suppression carriers have been added is applied frequency shift in such a way that the frequency of the peak suppression carriers returns, and an OFDM signal with a suppressed peak power is generated. As a result, in the generated OFDM signal, an added direct current signal has a frequency approximately the same as that of a peak suppression carrier and is furthermore converted into an alternate current signal (sinusoidal wave) with a fixed amplitude.

In a conventional method, enormous memory capacity or an enormous amount of calculation is required to calculate an alternate current signal (sinusoidal wave) for a peak suppression signal. However, with the present embodiment, a direct current signal is calculated as a peak suppression signal by applying frequency shift to a generated OFDM signal, which does not require enormous memory capacity or an enormous amount of calculation. In addition, according to the present embodiment, in case peak carriers are not fixedly set from among all subcarriers, that is, in case peak carriers are selected from among all subcarriers on a case-by-case basis, there is little increase in the amount of calculation. As described above, according to the above embodiment, it is possible to suppress peak power in an OFDM signal while minimizing memory capacity and the amount of calculation.

### (Embodiment 2)

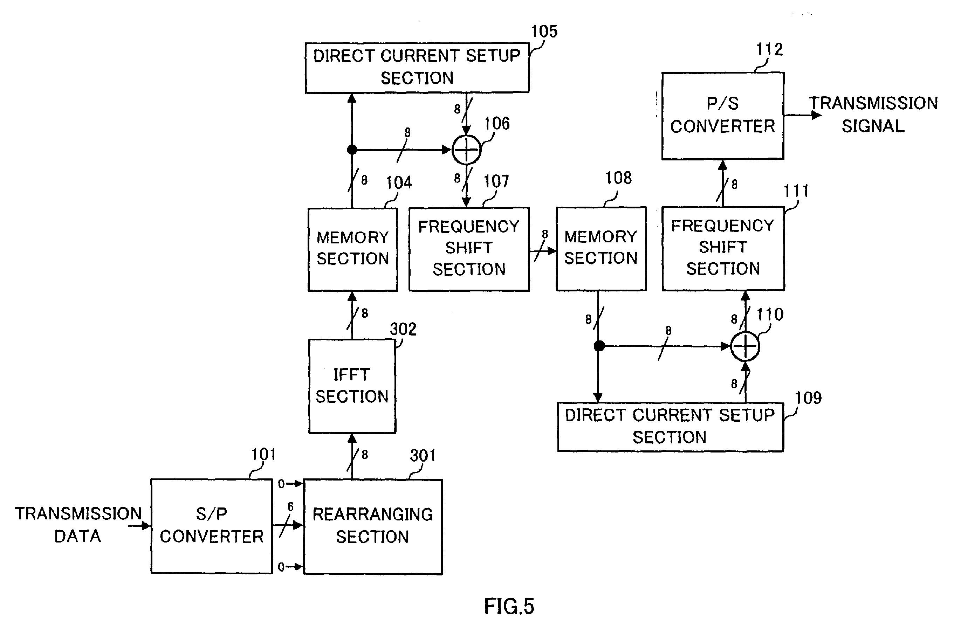

With the present embodiment, a case will be described here with reference to FIG.5 where, in Embodiment 1, the amount of calculation is reduced. FIG.5 is a block diagram showing a configuration of a peak power suppression apparatus according to Embodiment 2 of the present invention. In FIG.5, the sections identical with those in Embodiment 1 (FIG.3) will be given the same numerals without further description. With the present embodiment a case will be described here where, as in Embodiment 1, the total number of subcarriers is 6 and the number of peak suppression carriers is 2 (the first peak suppression carrier 208 and the second peak suppression carrier 201: see FIG.4A).

As shown in FIG.5, peak power suppression apparatus according to the present embodiment has the configuration of the peak power suppression apparatus according to Embodiment 1 in which rearranging section 301 is added, frequency shift section 103 is removed, and IFFT section 302 replaces IFFT section 102.

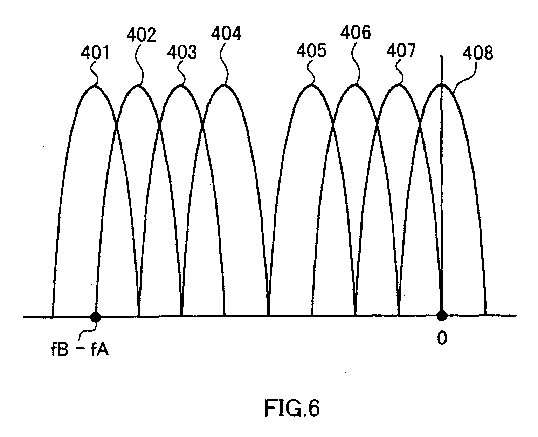

Rearranging section 301 rearranges transmission data in the first sequence to the sixth sequence from S/P converter 101 and signals with amplitude 0 and thereafter outputs them to IFFT section 302. The detail of the rearranging by rearranging section 301 will be described further with reference to FIG.6. FIG.6 is a pattern diagram showing a condition of subcarrier arrangement in a peak power suppression apparatus according to Embodiment 2 of the present invention.

First with reference to FIG.4A, as with regard to Embodiment 1, the frequency of the first peak suppression carrier 208 is fA and the frequency of the second peak suppression carrier 201 is fB.

With the present embodiment, in order to generate an OFDM signal, a signal with amplitude 0, which in Embodiment 1 is superposed on the first peak suppression carrier 208, is superposed on a subcarrier with frequency 0 rather than on the first peak suppression carrier 208. To be more specific, with reference to FIG.4A and FIG.6, IFFT section 302 superposes a signal with amplitude 0, which in Embodiment 1 is superposed on the first peak suppression carrier 208, on subcarrier 408 with frequency 0, superposes transmission data in the first sequence to the sixth sequence, which in Embodiment 1 are superposed on subcarrier 202 to subcarrier 207, on subcarrier 402 to subcarrier 407 respectively, and superposes the signal with amplitude 0, which in Embodiment 1 is superposed on the second peak suppression carrier 201, on subcarrier 401.

In order to thus enable IFFT section 302 to generate an OFDM signal, rearranging section 301 rearranges signals with amplitude 0 and the transmission data in the first sequence to the sixth sequence and thereafter outputs them to IFFT section 302. Incidentally, in case this rearranging section 301 is not provided, as in Embodiment 1 (see FIG.4A), IFFT section 302 produces an OFDM signal by superposing signals with amplitude 0 on subcarrier 208 and subcarrier 201 and by superposing the transmission data in the first sequence to the sixth sequence on subcarrier 202 to subcarrier 207 respectively.

Now to draw comparison between FIG.6 and FIG.4B, the frequency of subcarrier 208 (subcarrier 201) in FIG.4B is the same as that of subcarrier 408 (subcarrier 401) in FIG.6, and moreover the frequency of subcarrier 202 to subcarrier 207 in FIG.4B is the same as that of subcarrier 402 to subcarrier 407 in FIG.6. Similarly, the data signals superposed on subcarrier 202 to subcarrier 207 in FIG.4B are the same as those superposed on subcarrier 402 to subcarrier 407 in FIG.6, and moreover the signal superposed on subcarrier 208 (subcarrier 201) in FIG.4B is the same as that superposed on subcarrier 408 (subcarrier 401) in FIG.6. Consequently, an OFDM signal generated in IFFT section 302 becomes equivalent to the first OFDM signal frequency-shifted through frequency shift section 103 in Embodiment 1.

As a result, according to the present embodiment, without frequency shift that took place in Embodiment 1, it is possible to acquire the first OFDM signal frequency-shifted through frequency shift section 103 of Embodiment 1 by means of IFFT section 302. In other words, with the present embodiment, it is possible to reduce the number of times of frequency shifts by one time compared to Embodiment 1 and acquire the frequency-shifted first OFDM signal.

An OFDM signal thus generated by means of IFFT section 302 is stored in memory section 104 and thereafter applied the same processings as those described with Embodiment 1.

As described above, with the present embodiment, first, an OFDM signal is generated by applying signals with amplitude 0 that are to be superposed on peak suppression carriers on subcarriers with frequency 0 instead of the above peak suppression carriers. Next, direct current signals are added to this generated OFDM signal, and thereafter frequency shift is applied to the OFDM signal, to which direct current signals have been added, in such a way that makes the frequency of the subcarriers on which signals with amplitude 0 have been superposed becomes the frequency of the peak suppression carriers. By this means, it is possible to generate without frequency shift an OFDM signal which is acquired through IFFT processing and frequency shift described with Embodiment 1. Consequently, with the present embodiment, it is possible to further reduce the amount of calculation compared to Embodiment 1.

### (Embodiment 3)

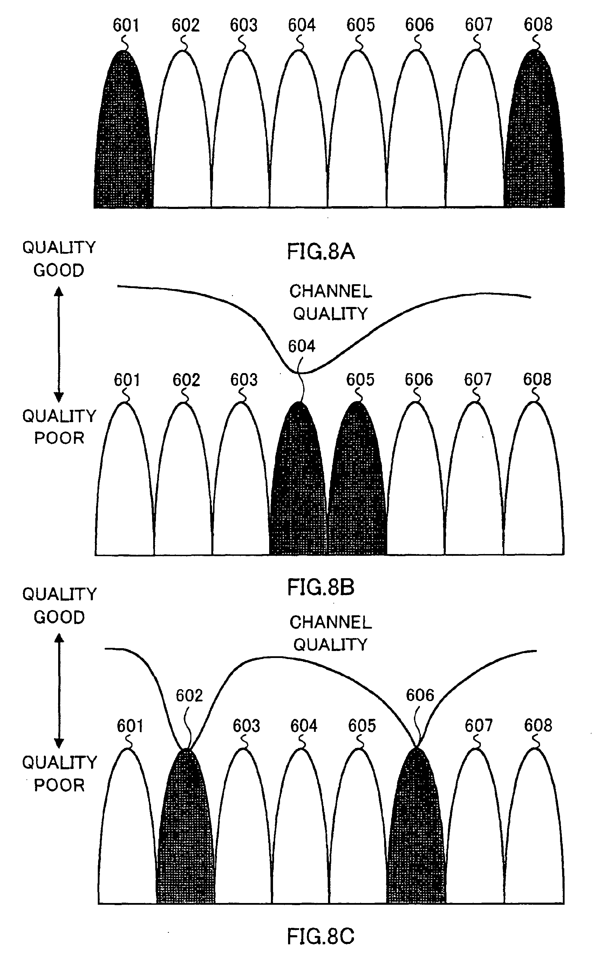

With the present embodiment a case will be described with reference to FIG.8 where in Embodiment 1 peak suppression carriers are selected from all subcarriers on the basis of channel quality, that is, on the basis of reception quality in the receiving-side apparatus. FIG.8A is a pattern diagram showing a first sample arrangement of subcarriers in a peak power suppression apparatus according to Embodiment 1 of the present invention, FIG.8B is a pattern diagram showing a sample arrangement of subcarriers in a peak power suppression apparatus according to Embodiment 3 of the present invention, and FIG.8C is a pattern diagram showing a second sample arrangement of subcarriers in a peak power suppression apparatus according to Embodiment 3 of the present invention.

With Embodiment 1 above, as shown in FIG.8A, regardless of reception quality in the receiving-side apparatus that receives transmission signals generated by the peak power suppression apparatus, certain carriers (here subcarrier 601 and subcarrier 608) of all subcarriers are used as peak suppression carriers to superpose peak suppression signals on, and of all subcarriers, subcarriers (here from subcarrier 602 to subcarrier 607) other than peak suppression carriers are used for data carriers to superpose transmission data on.

Now in the receiving-side apparatus that receives transmission signals generated by the peak power suppression apparatus according to Embodiment 1, actually, quality with respect to the signals superposed on subcarriers varies on a per subcarrier basis (hereinafter simply the "quality of subcarrier"). To be more specific, as shown for instance in FIG.8B, a case might occur in the receiving-side apparatus where the quality of subcarrier 601 to subcarrier 603 and subcarrier 606 to subcarrier 608 is good whereas the quality of subcarrier 604 and subcarrier 605 deteriorates. Moreover, as shown in FIG.8C, a case might occur in the receiving-side apparatus where the quality of subcarrier 601, subcarrier 603 through subcarrier 605, subcarrier 607, and subcarrier 608 is good, whereas the quality of subcarrier 602 and subcarrier 606 deteriorates.

In such case, if as shown in FIG.8A subcarrier 601 and subcarrier 608 are used as peak suppression carriers, transmission efficiency decreases with respect to transmission data (data signals). More specifically, regarding the case of FIG.8B (the case of 8C), in the receiving-side apparatus, while reception quality is good regarding the peak suppression signals superposed on subcarrier 601 and subcarrier 608, with regard to the transmission data superposed on subcarrier 604 and subcarrier 605 (subcarrier 602 and subcarrier 606), reception quality deteriorates. Here a peak suppression signal is a signal used to suppress peak power in an OFDM signal and is an invalid signal that cannot be demodulated in the receiving-side apparatus. On the grounds that reception quality deteriorates with valid data (transmission data) while reception quality is good with invalid signals, consequently, transmission efficiency with transmission data decreases.

So in order to prevent such decrease in transmission efficiency with transmission data, with the present embodiment, a subcarrier poor in quality in the receiving-side apparatus is used as a peak suppression carrier, and subcarrier good in quality in the receiving-side apparatus is used as a data carrier. In short, according to the present embodiment, peak suppression carriers are selected from all subcarriers on the basis of channel quality. By this means, it is possible to suppress peak power in an OFDM signal and to improve the quality of valid signals in the receiving-side apparatus.

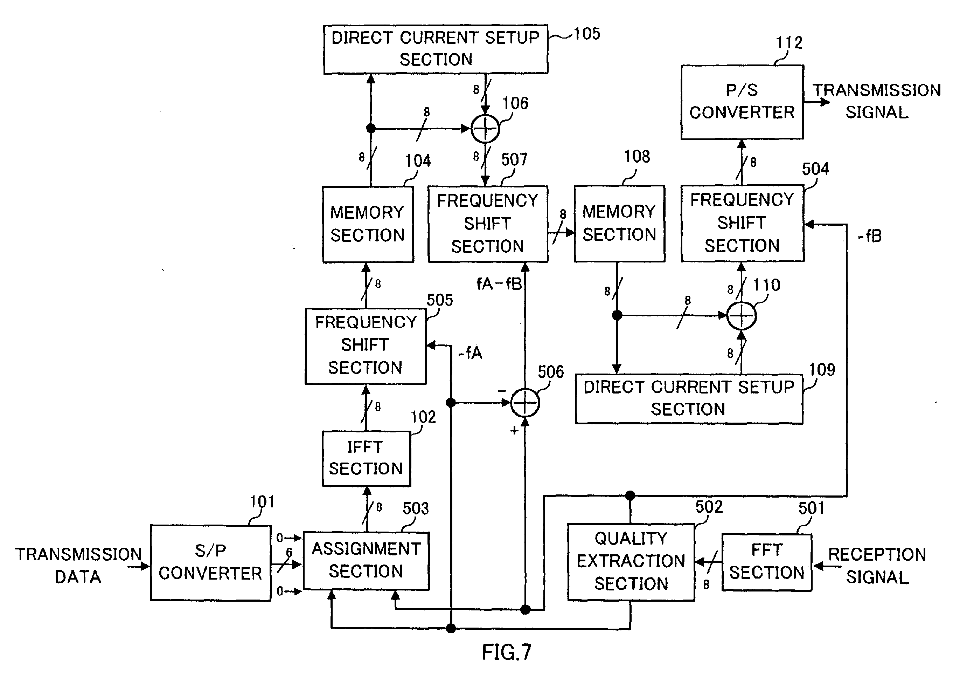

Next the detailed configuration of the peak power suppression apparatus according to the present embodiment will be described with reference to FIG.7. FIG.7 is a block diagram showing a configuration of a peak power suppression apparatus according to Embodiment 3 of the present invention. In FIG.7, the sections identical with those in Embodiment 1 (FIG.3) will be given the same numerals without further description.

The peak power suppression apparatus according to the present embodiment has the configuration of Embodiment 1 in which FFT section 501, quality extraction section 502, assignment section 503, and addition section 506 are added and in which frequency shift section 505, frequency shift section 507, and frequency shift section 504 replace frequency shift section 103, frequency shift section 107, and frequency shift section 111.

Moreover, a receiving-side apparatus that communicates with the peak power suppression apparatus according to the present embodiment receives signals generated in the peak power suppression apparatus according to the present embodiment, applies FFT (Fourier Transform) processing to the received signals, and extracts the signal superposed on each subcarrier. Next, the receiving-side apparatus uses the extracted signals and detects the quality of each subcarrier. Following this, this receiving-side apparatus uses the detection results and generates quality information that conveys the quality of each subcarrier, and transmits this quality information to the peak power suppression apparatus according to the present embodiment by way of superposing the quality information on set subcarriers. A case will be described below where the receiving-side apparatus transmits quality information to the peak power suppression apparatus according to the present embodiment by means of OFDM scheme communication. Nevertheless, the same effect can be achieved by transmitting quality information from the receiving side apparatus to the peak power suppression apparatus by means of non-OFDM scheme communication (for instance, TDMA and CDMA scheme communications).

FFT section 501 applies FFT (Fourier Transform) processing to a received signal that is transmitted from the receiving-side apparatus and that conveys the quality of subcarriers, and extracts the signal superposed on each subcarrier, whereby the quality information superposed on the above set subcarriers is extracted. The extracted quality information is output to quality extraction section 502.

Quality extraction section 502 uses the quality information and perceives subcarriers of less desirable quality (two subcarriers in the present embodiment) among all subcarriers, and sets these subcarriers the first peak suppression carrier and the second peak suppression carrier, respectively. Following this, quality extraction section 502 outputs the frequency (fA) of the set first peak suppression carrier to assignment section 503, frequency shift section 505, and to addition section 506, and, similarly, outputs the frequency (fB) of the set second peak suppression carrier to assignment section 503, addition section 506, and to frequency section shift 504.

Using the frequency of the first peak suppression carrier and the second peak suppression carrier from quality extraction section 502, assignment section 503 rearranges signals with amplitude 0 and the transmission data in the first sequence to the sixth sequence and thereafter outputs the rearranged transmission data to IFFT section 102. More specifically, by means of IFFT section 102, assignment section 503 rearranges signals with amplitude 0 and transmission data in the first sequence to the sixth sequence in such a way that signals with amplitude 0 are superposed on the subcarrier with frequency fA (that is, the first peak suppression carrier) and the subcarrier with frequency fB (that is, the second peak suppression carrier) and thereafter outputs the rearranged signals and transmission data to IFFT section 102.

Frequency shift section 505 shares the same configuration with frequency shift section 103 of Embodiment 1 except with regard to the below point. That is, frequency shift section 505 applies frequency shift to the first OFDM signal by the frequency (fA) of the first peak suppression carrier from quality extraction section 502.

Addition section 506 subtracts the frequency (fA) of the first peak suppression carrier from quality extraction section 502 from the frequency (fB) of the second peak suppression carrier and outputs the subtraction result (fA-fB) to frequency shift section 507.

Frequency shift section 507 shares the same configuration with frequency shift section 107 of Embodiment 1 except with regard to the below point. That is, frequency shift section 507 applies frequency shift to the second OFDM signal by the frequency (fA-fB) from addition section 506.

Frequency shift section 504 shares the same configuration with frequency shift section 111 of Embodiment 1 except with regard to the below point. That is, frequency shift section 504 applies frequency shift to the third OFDM signal by the frequency (fB) of the second peak suppression carrier from quality extraction section 502.

A case is described above where the receiving-side apparatus transmits quality information that shows the quality of each subcarrier to the peak power suppression apparatus according to the present embodiment, and this peak power suppression apparatus uses the above quality information and selects peak suppression carriers. However, the same effect can be achieved where the receiving apparatus uses the quality of each subcarrier to select peak suppression carriers and transmits the selection results to the peak power suppression apparatus according to the present embodiment, and this peak power suppression apparatus selects peak suppression carriers on the basis of the selection results from the receiving-side apparatus.

As described above, with the above present embodiment, peak carriers are selected from among all subcarriers on the basis of channel quality, that is, on the basis of the quality of each subcarrier, so it is possible to improve transmission efficiency with transmission data.

### (Embodiment 4)

With the present embodiment a case will be described here where in Embodiment 1 to Embodiment 3 a peak suppression signal for suppressing peak power in an OFDM signal is calculated in a more simple way.

In Embodiment 1 to Embodiment 3, as a peak suppression signal for suppressing peak power in an OFDM signal, a value is used such as one (that is, an optimum peak suppression signal) that minimizes the square sum of the real part and the imaginary part of the OFDM signal. By this means, peak power is unfailingly suppressed in the OFDM signal. Nevertheless, in order to reduce the amount of calculation required, it is desirable to calculate a peak suppression signal in an even more simple way.

So with the present embodiment, a value is used such as one that makes the peak in each of the real part and the imaginary part in an OFDM signal small (that is, a semi-optimum peak suppression signal). In this case, it suffices to use for a semi-optimum peak suppression signal a value such as one that when added to an OFDM signal makes the maximum value and the minimum value in the real part and in the imaginary part of the OFDM signal equal in their absolute values.

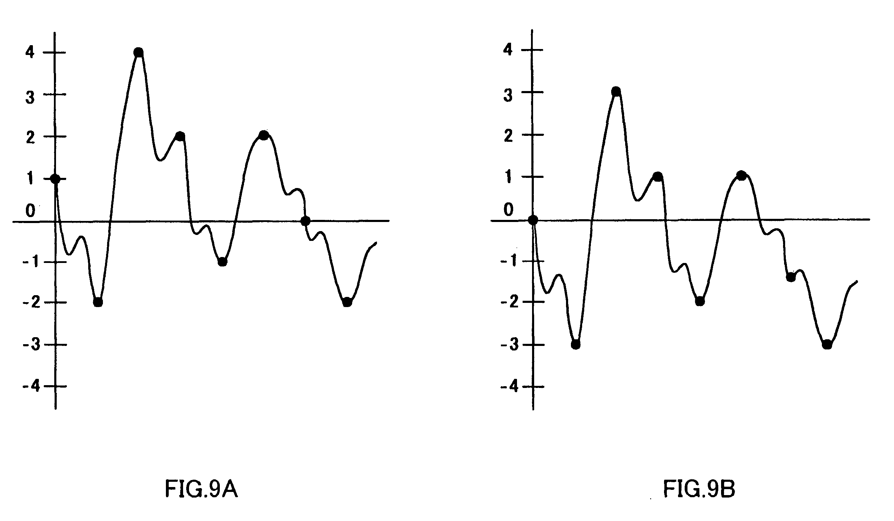

A calculation method for a semi-optimum peak suppression signal will be described in detail with reference to FIG.9. FIG.9A is a pattern diagram showing a condition of a wave in the real part of an OFDM signal in a peak power suppression apparatus according to Embodiment 4 of the present invention, and FIG.9B is a pattern diagram showing a wave in the real part of an OFDM signal to which a semi-optimum peak suppression signal is added in a peak power suppression apparatus according to Embodiment 4 of the present invention.

A case will be described here where the real part of the first OFDM signal stored in memory section 104 (see FIG.3) has the wave form shown in FIG.9A. A shown in FIG.9A, the amplitude at each sample point in the real part of the first OFDM signal is 1, -2, 4, 2, -1, 2, 0, and -2. The peak in the real part of this first OFDM signal is 4.

First, the maximum value and the minimum value that includes a code will be detected. Here the maximum value is 4 and the minimum value is -2. Next, the value acquired by multiplying the sum of the maximum value and the minimum value by (-1/2) becomes the value of the real part of a peak suppression signal. Here the real part of the peak suppression signal is: (4-2) × (-1/2) = -1.

By adding the real part of a peak suppression signal calculated thus to the real part of the first OFDM signal shown in FIG.9A, the real part of the second OFDM signal such as shown in FIG.9B is acquired. As shown in FIG.9B, the peak in the real part of the second OFDM signal is suppressed from 4 to 3. Although the calculation method described above in detail focuses only on the real part, the imaginary part is calculated in the same way with the real part.

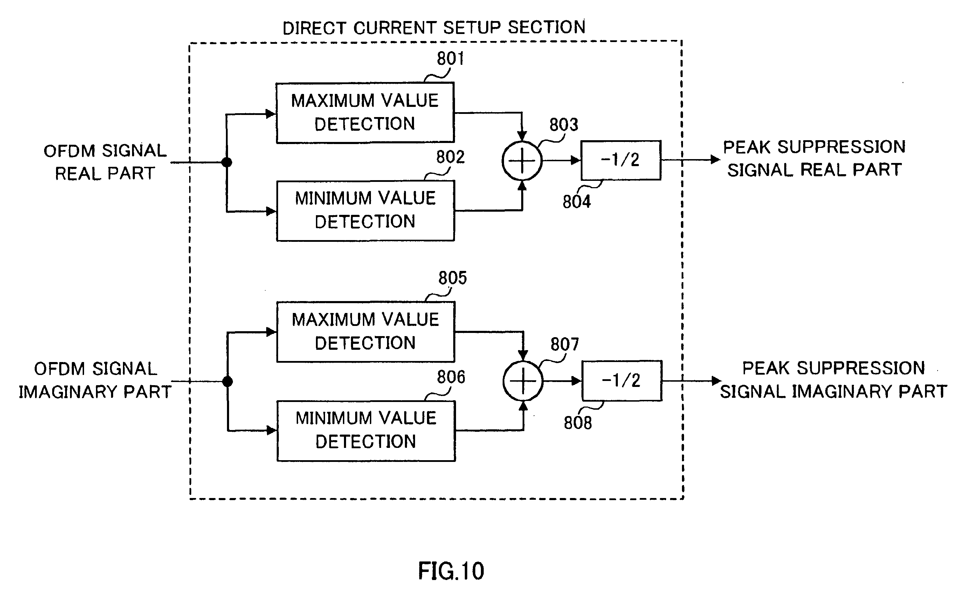

Next the configuration of a direct current setup section for the calculation of a semi-optimum peak suppression signal such as above will be described with reference to FIG.10. FIG.10 is a block diagram showing a configuration of a direct current setup section in a peak power suppression apparatus according to Embodiment 4 of the present invention. Incidentally, direct current section 105 and direct current section 109 (see FIG.3) can be implemented by the configuration shown in FIG.10. Although here the focus is on direct current setup section 105 as an example, the following description is applicable to direct current setup section 109.

In FIG.10, the real part (imaginary part) of the first OFDM signal stored in memory section 104 (see FIG.3) is output to maximum value detection section 801 and minimum value detection section 802 (maximum value detection section 805 and minimum value detection section 806).

Maximum value detection section 801 (minimum value detection section 802) detects the maximum value (minimum value) in the real part of the first OFDM signal and outputs the maximum value to addition section 803. Addition section 803 adds the maximum value and the minimum value in the real part of the first OFDM signal, and outputs the addition result to multiplication section 804. Multiplication section 804 multiplies the addition result from addition section 803 by (-1/2) and sets the multiplication result the real part of the peak suppression signal. The real part of this peak suppression signal (direct current signal) is added to the imaginary part of the first OFDM signal by means of direct current setup section 105 (see FIG.3).

Maximum value detection section 805 (minimum value detection section 806) detects the maximum value (minimum value) in the imaginary part of the first OFDM signal and outputs the maximum value to addition section 807. Addition section 807 adds the maximum value and the minimum value in the imaginary part of the first OFDM signal, and outputs the addition result to multiplication section 808. Multiplication section 808 multiplies the addition result from addition section 807 by (-1/2) and sets the multiplication result the imaginary part of the peak suppression signal. The imaginary part of this peak suppression signal (direct current signal) is added to the imaginary part of the first OFDM signal by means of direct current setup section 105 (see FIG.3).

As described above, with the present embodiment, as a peak suppression signal to be added to an OFDM signal, a value such as one that makes the absolute values of the maximum value and the minimum value equal is calculated with respect to both the real part and the imaginary part. By this means, it is possible to calculate a peak suppression signal in an even more simple way compared to Embodiment 1 to Embodiment 3. Such calculation of the peak suppression signal is made implementable by the application of frequency shift to an OFDM signal in such a way that makes the frequency of a peak suppression carrier 0. In other words, a direct current signal can be used in place of a peak suppression signal, and this makes it possible to calculate a semi-optimum peak suppression signal in a simple way. On the other hand, if a non-direct current signal is used in place of a peak suppression signal, this makes it difficult to calculate a semi-optimum peak suppression signal in a simple way.

In Embodiment 1 to Embodiment 4, cases were described with respect to communication using an OFDM scheme as an example of multicarrier modulation scheme communications on the grounds that peak power in a multicarrier signal can be calculated in the most effective and simple way. The present invention is applicable to communications based on multicarrier modulation schemes other than OFDM schemes.

For instance, the present invention is applicable to communications based on W-CDMA schemes that use a number of frequency bands (carriers). Normally in communications based on W-CDMA schemes, data signal is spread over one of a number of frequency bands. When applying the present invention to such communications based on W-CDMA schemes, from among a number of frequency bands (carriers), some are used for peak suppression carriers and the rest of the frequency bands (carriers) are used for data carriers. By superposing peak suppression signals on peak suppression carriers and superposing transmission data on data carriers and by adding signals superposed on each carrier, it is possible to generate a multicarrier signal with a suppressed peak power.

The above peak power suppression apparatus according to Embodiment 1 to Embodiment 4 can be installed in communication terminal apparatus and base station apparatus in digital mobile communications systems. Communication terminal apparatus and base station apparatus that install the above peak power suppression apparatus are capable of minimizing memory capacity and the amount of calculation and suppressing peak power in multicarrier signals.

As described above, according to the present invention, frequency shift is applied to an OFDM signal generated by way of superposing signals with amplitude 0 on set subcarriers of all subcarriers in such a way as to make the frequency of the above set subcarriers in this OFDM signal 0, and direct current signals for the suppression of peak power in this OFDM signal are added to the frequency-shifted OFDM signal, and it is thus possible to provide a peak power suppression apparatus and an peak power suppression method that reduces memory capacity and the amount of calculation while suppressing peak power in an OFDM signal.

This application is based on Japanese Patent Application No.2001-010835 filed on January 18, 2001, entire content of which is expressly incorporated by reference herein.

### Industrial Applicability

The present invention is applicable to peak power suppression apparatus and peak power suppression method that suppress peak power in multicarrier signals generated in communication that employs multicarrier modulation schemes such as OFDM modulation schemes.

## Claims

1. A peak power suppression apparatus, comprising:
a generation section that generates a multicarrier signal in which a signal with amplitude 0 is superposed upon a specific carrier of all carriers;
a first frequency shift section that applies frequency shift to a generated multicarrier signal in such a way that a frequency of said specific carrier becomes 0;
an addition section that adds a direct current signal that is for suppressing peak power in the generated multicarrier signal to the multicarrier signal after frequency shift; and
a second frequency shift section that applies frequency shift to the multicarrier signal acquired through the addition in such a way that the frequency of said specific carrier returns.

2. The peak power suppression apparatus according to claim 1 further comprising a reception section that receives transmission quality information of a carrier, wherein said generation section generates a multicarrier signal in which a signal with amplitude 0 is superposed upon a carrier selected on the basis of said transmission quality information.

3. The peak power suppression apparatus according to claim 1, wherein
said addition section includes a calculation section that calculates a direct current signal that is for minimizing the square sum of a real part and an imaginary part of the generated multicarrier signal, and
adds a calculated direct current signal to the multicarrier signal after frequency shift.

4. The peak power suppression apparatus according to claim 1, wherein
said addition section includes a calculation section that calculates a first direct current signal that equalizes an absolute value of a maximum value and an absolute value of a minimum value in a real part of said generated multicarrier signal, and a second direct current signal that equalizes an absolute value of a maximum value and an absolute value of a minimum value in an imaginary part of said generated multicarrier signal, and
adds a calculated first direct current signal and second direct current signal respectively to the real part and the imaginary part of the multicarrier signal after frequency shift.

5. A communication terminal apparatus comprising the peak power suppression apparatus according to claim 1.

6. A base station apparatus comprising the peak power suppression apparatus according to claim 1.

7. A peak power suppression method comprising the steps of:
generating a multicarrier signal in which a signal with amplitude 0 is superposed upon a specific carrier of all carrier;
applying frequency shift to a generated multicarrier signal in such a way that a frequency of said specific carrier becomes 0;
adding a direct current signal that is for suppressing peak power in the generated multicarrier signal to the multicarrier signal after frequency shift; and
applying frequency shift to the multicarrier signal acquired through the addition in such a way that the frequency of said specific carrier returns.
